# EUROPEAN PATENT APPLICATION

(11) **EP 3 957 871 A1**
(43) Date of publication of application: **23.02.2022**
(21) Application number: 20790816.1
(22) Date of filing: 21.02.2020
(51) Int. Cl.: F16B 39/14, F16B 37/12

(54) **LOOSENING PREVENTION NUT**

(30) Priority: 17.04.2019 KR 20190045020
(71) Applicant: Moon, Sang Yeol, Gyeongsangbuk-do 36807 (KR)
(72) Inventor: Moon, Sang Yeol, Gyeongsangbuk-do 36807 (KR)
(74) Representative: Petraz, Gilberto Luigi
(86) International application number: PCT/KR2020/002506
(87) International publication number: WO 2020/213828

(57) **Abstract**

The present invention provides a loosening prevention nut (11) having a threaded portion (12) formed with a thread on a lower portion of an inner peripheral surface thereof, and having an enlarged diameter portion (17) on an upper portion of the inner peripheral surface, and on which a coil spring (14) is seated, wherein the enlarged diameter portion (17) which is larger than an inner diameter of the threaded portion (12) is formed on the upper portion of the inner peripheral surface, a plurality of groove portions (18) are formed on the inner peripheral surface on the enlarged diameter portion (17), an inner diameter of the coil spring (14) seated on the enlarged diameter portion (17) is formed so as to be larger than the inner diameter of the threaded portion (12), and a raised catch (15) is formed at an upper end of the coil spring (14) inserted into the groove portions (18).

## Description

### Technical Field

This invention is a loosening prevention nut, more specifically, a loosening prevention nut that is coupled with a bolt to prevent arbitrary loosening of the coupling.

### Technical Background

In general, bolts and nuts are used to combine two objects through a coupling in diverse fields, such as automobile components assembly, electronic parts assembly, furniture assembly and construction sites. However, the coupling of bolts and nuts had a problem which causes negligence when such coupling is loosened due to vibration or external impact caused by driving the vehicle, etc.

In particular, in recent years, with the expansion of the installation of electronic devices in automobiles or general industrial machines, there is a need to use high currency or high voltage. If the coupling of bolts and nuts in the power supply part becomes loose, problems may arise, such as an accident caused by fire or power outage of the electric device due to electric spark.

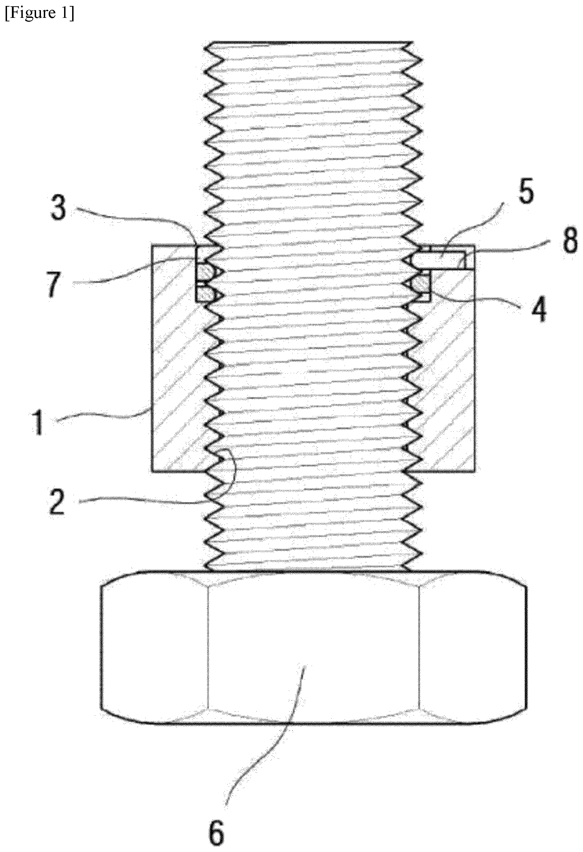

In order to solve this problem, a loosening prevention nut as shown in Figure 1 has been proposed. Previously, loosening prevention nuts form a thread portion (2) on the lower parts of the inner peripheral surface, and an enlarged diameter portion (7) on the upper parts, and the coil spring (4) is inserted into the enlarged portion. Here, an outwardly bent portion (5) is formed at the upper end of the coil spring (4).

On the other hand, the threaded portion (2) of the bolt (6) is a right-hand thread and the coil spring (4) is inserted into the thread portion (2) of the bolt (6) as shown.

When the bolt (6) is coupled with this loosening prevention nut, the coil spring (4) inside the nut (1), which is fixed when the bolt rotates in the clockwise direction, makes the bolt (6) rotate in the opposite direction to the direction of the coil spring's (4) thread with the upper end fixed, thereby enlarging the inner diameter of the coil spring (4). In this case, the frictional force in the contact area between the side of inner peripheral surface of the coil spring (4) and the side of the thread portion (2) of the bolt (6) decreases, making it easier to fasten the bolt with the nut.

On the contrary, when trying to separate the bolt (6) fastened to the loosening prevention nut, when the bolt tries to rotate in the counter clockwise direction, it tends to rotate in the same direction as the thread direction of the coil spring (4) of the nut (1), so the inner diameter of the coil spring (4) is reduced. In this case, the loosening of the bolt (6) from the nut (1) is restricted as the frictional force in the contact area between the side of inner peripheral surface of the coil spring (4) and the side of the thread portion (2) of the bolt (6) increases.

However, because there is a bent portion (5) formed at the end of the coil spring (4) of the existing loosening prevention nut as shown in Figure 1, when a large force is applied to loosen the bolt (6), the bent portion (5) gets cut, loosening the bolt (6) as a result.

The conventional loosening prevention nut is Korea Patent Registration No. 10-0701643.

### Detailed Description

### Technical Problem

This invention is intended for solving problems as described above, and the purpose of this invention is to facilitate the fastening when fastening a bolt to a loosening prevention nut or vice versa, while preventing the loosening of the loosening prevention nut when there is rotational force applied to loosen the bolt fastened to a loosening prevention nut or vice versa through a tight fitting of the inclined sides of the raised catch of the coil spring between the groove portions of the nut and the side of bolt thread.

### Solution

In order to solve this problem, for the loosening prevention nut with a threaded portion (12) with the thread on the lower part of the inner peripheral surface and an enlarged diameter portion (17) where the coil spring (14) is seated,

there is an enlarged diameter portion (17) larger than the inner diameter of the threaded portion (12) on the upper portion of the inner diameter, and the inner diameter of the coil spring (14) seated in the enlarged diameter portion (17) above shall be larger than the inner diameter of the threaded portion (12) above.

There is a plurality of groove portions (18) in the inner peripheral surface of the enlarged diameter portion (17), and a loosening prevention nut is provided characterized by a raised catch (15) that is outwardly bent at the end of the upper part of the coil spring inserted into the groove portions (18).

Here, the cross-sectional shape of the raised catch (15) above is preferably formed in a countersunk shape.

In addition, the cross-sectional shape of the groove portions (18) is preferably formed in a V-shape.

The planar shape of the above raised catch (15) is formed in a countersunk shape with both sides gradually broadening, and in a wedge shape on the front with both sides gradually narrowing.

According to another characteristic of this invention, there is a loosening prevention nut characterized in that the upper portion of the enlarged diameter portion (17) has a stepped portion (13) so that the coil spring (14) above does not deviate upward.

### Effects

According to this invention as described above, when the bolt (16) is fastened to a loosening prevention nut or vice versa, the fastening shall be facilitated, but when there is an external force applied to loosen the bolt (16) fastened to the loosening prevention nut or vice versa, the raised catch (15) of the coil spring shall be tightly fixed to the side of the thread of the bolt (16) and the inclination of the groove portions (18), resulting in preventing the loosening of the loosening prevention nut by maximizing the frictional force between the coil spring and the side thread of the bolt (16).

### Brief Description of the Drawings

Figure 1 shows an example of a conventional loosening prevention nut.
Figure 2 shows an expanded view of the loosening prevention nut in the present invention.
Figure 3 shows the A-A cross-sectional view of the loosening prevention nut in Figure 2.
Figure 4 shows a planar view and a frontal view of an example of the present invention.
   11: nut 12: threaded portion
   13: stepped portion 14: coil spring
   15: raised catch 16: bolt
   17: enlarged diameter portion 18: groove portions

### Modes for Implementation

The objective, characteristics and advantages of the present invention described above shall become more concrete through the following detailed description. Hereinafter, a preferred example of the present invention will be described based on the accompanying drawings.

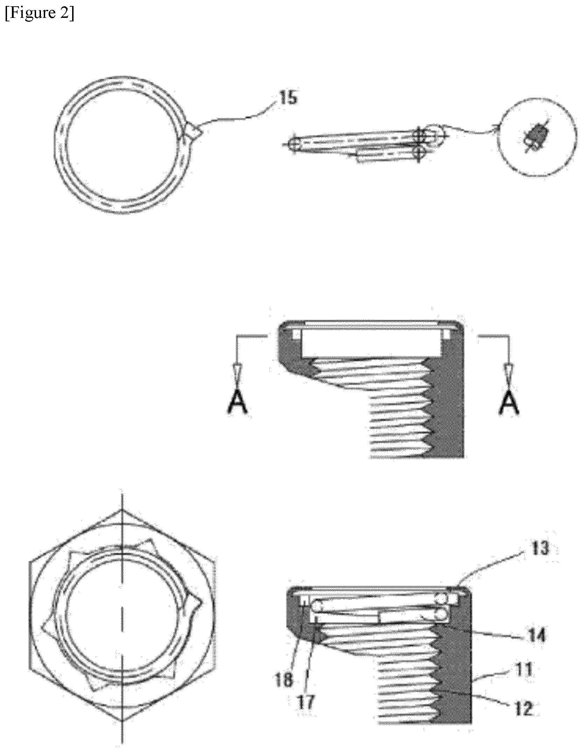

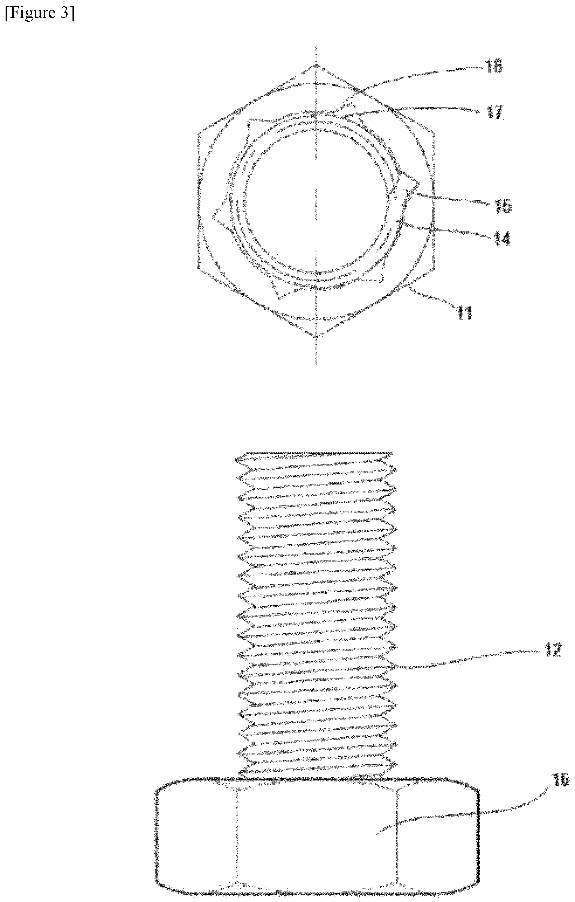

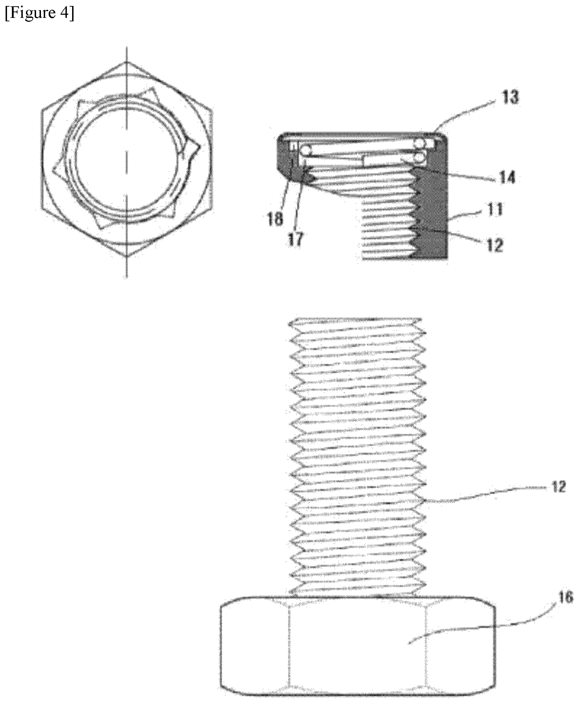

Figures 2 to 4 are drawings indicating the loosening prevention nut of the present invention. As shown, the loosening prevention nut according to Figure 2 of the present invention is about a loosening prevention nut with threaded portion (12) with a thread on the lower portion of the inner peripheral surface and an enlarged diameter portion (17) where the coil spring (14) is seated on the upper portion of the inner peripheral surface. This is a loosening prevention nut with an enlarged diameter portion (17) larger than the inner diameter of the threaded portion (12) on the upper portion of the inner peripheral surface, the inner diameter of the coil spring (14) seated on the enlarged diameter portion (17) above larger than the inner diameter of the thread part (12), plurality of groove portions (18) on the inner peripheral surface of the enlarged diameter portion (17), and an outwardly bent raised catch (15) at the upper end of the coil spring (14) inserted into the groove portions (18).

On the other hand, the bolt (16) is a right-hand thread, and the coil direction of the coil spring (14) is formed in the same direction as the spiral of the bolt (16).

When the bolt (16) is fastened to the loosening prevention nut (11) from the bottom to the upper portion, the coil direction of the coil spring (14) and the rotational direction of the bolt (16) centered on the head of the bolt (16) become opposite to each other based on the raised catch (15) with the raised catch (15) fixed to the groove portions (18), thereby expanding the inner diameter with the coil spring (14) loosening from the bolt (16).

In this case, the fastening of the loosening prevention nut (11) and the bolt (16) is facilitated by minimizing the frictional force between the side of the inner peripheral surface of the coil spring (14) and the side part of the bolt (16) thread.

However, if there is rotational force (a force that makes it rotate to the left) that loosens the loosening prevention nut (11) fastened to the bolt (16), when the bolt (16) tries to rotate in the counter clockwise direction (when the bolt head rotates in reverse direction of the thread), the coil spring (14) inside the loosening prevention nut (11) is wound around the bolt along the reverse direction of the bolt (16) thread, and as the raised catch (15) on upper portion of the coil spring (14) is fixed to the groove portions (18), the coil spring (14) will more powerfully wind the bolt (16), resulting in decreased inner diameter of the coil spring (14), thereby preventing the loosening of the loosening prevention nut (11) since the bolt (16) cannot rotate to the left.

In other words, the loosening of the loosening prevention nut (11) from the bolt (16) is prevented due to an increase in frictional force between the inner peripheral surface of the coil spring (14) and the side of the bolt (16) thread as portions that are in contact between them is greatly compressed.

Here, the cross-sectional shape of the raised catch (15) is a countersunk shape because the right side inclined surface of the countersunk shape is in close contact with the V-shaped right inclined surface of the groove portions (18), and the left side inclined surface of the countersunk shape is in close contact with the side surface of the bolt (16) thread, thereby tightly fixing the inclined surfaces on both sides of the raised catch (15) between the groove portions (18) and the threaded side of the bolt (16), resulting in completely blocking the rotation of the loosening prevention nut (11) and preventing its loosening.

As shown in Figure 2, the planar view of the raised catch (15) is a countersunk shape with broadening sides, and the front view is a wedge shape with narrowing sides.

The countersunk shape with broadening sides in the planar view of the raised catch (15) has the right include surface of the countersunk shape in close contact with the right incline of the V-shape of the groove portions (18), and the left slope of the countersunk shape is in close contact with the thread side of the bolt (16); therefore, the countersunk shape tightly sits between the right slope of the groove portions (18) and the thread side of the bolt (16), thereby completely preventing the loosening of the loosening prevention nut (11).

In addition, both sides of the frontal view of the raised catch (15) have a gradually narrowing wedge shape. If the frontal view is a countersunk shape, the length on top of the countersunk shape is larger than the pitch of the bolt (16), so the right slope of the countersunk shape cannot be tightly fixed to the thread side of the bolt (16). Therefore, to ensure a tight fix, both sides of the frontal view of the raised catch (15) is in a gradually narrowing wedge shape so that the wedge shape is tightly fixed between the right slope surface of the groove portions (18) and the thread side of the bolt (16), thereby completely preventing the loosening of the loosening prevention nut (11) by making it impossible to rotate left from the bolt (16).

As shown in Figure 2, the stepped portion (13) formed on the upper portion of the enlarged diameter portion (17) has an effect of preventing the coil spring (14) above from deviating upward.

The present invention described above is not limited to the embodiments and the accompanying drawings, and it is made clear to those who have the general knowledge in technical fields to which the present invention pertains that various substitutions, modifications and changes are possible within the scope of technicalities of the present invention.

## Claims

1. Regarding a loosening prevention nut with a thread portion (12) with a thread on the lower portion of the inner peripheral surface, and an enlarged diameter portion (17) where the coil spring (14) is seated on the upper portion of the inner peripheral surface:
A loosening prevention nut **characterized by** an enlarged diameter portion (17) larger than the inner diameter of the thread portion (12) on the upper portion of the inner peripheral surface, and an inner diameter of the coil spring (14) seated on the enlarged diameter portion (17) larger than the inner diameter of the thread part (12);
Plurality of groove portions (18) on the inner peripheral surface of the enlarged diameter portion (17), and a V-shaped cross-sectional shape of the groove portions (18);
An outwardly bent raised catch (15) on the upper cross section of the coil spring (14) inserted into the groove portions (18), and a countersunk shape cross sectional view of the raised catch (15).

2. Regarding claim 1:
A loosening prevention nut **characterized by** a countersunk shaped planar view of the raised catch (15) that broadens to the sides, and a wedge shaped frontal view that narrows on the sides.

3. Regarding claim 1 or claim 2:
A loosening prevention nut **characterized by** a stepped portion (13) formed to prevent upward deviation of the coil spring (14) on the upper portion of the enlarged diameter portion (17).
